# EUROPÄISCHE PATENTSCHRIFT

(11) **EP 3 583 997 B1**
(45) Veröffentlichungstag und Bekanntmachung des Hinweises auf die Patenterteilung: **28.09.2022**
(21) Anmeldenummer: 18400026.3
(22) Anmeldetag: 18.06.2018
(51) Int. Cl.: B01D 53/14, C01B 3/52, C10K 1/08

(54) **VERFAHREN UND ANLAGE ZUR REINIGUNG VON ROHSYNTHESEGAS**
METHOD AND SYSTEM FOR THE PRODUCTION OF SYNTHESIS GAS
PROCÉDÉ ET INSTALLATION DE NETTOYAGE DE GAZ DE SYNTHÈSE BRUT

(43) Veröffentlichungstag der Anmeldung: 25.12.2019
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Corbet, Sharon, 60438 Frankfurt (DE); Gubrinski, Alfred, 64390 Erzhausen (DE); Puri, Pankaj, 121004 Faridabad (IN); Rappold, Dorit, 60487 Frankfurt (DE)
(74) Vertreter: Dropsch, Holger

(56) Entgegenhaltungen:
- EP-A1- 1 022 046
- DE-A1- 2 433 078
- DE-A1-102008 057 937
- DE-A1-102012 023 333
- US-A- 4 189 307
- US-A- 4 320 100
- US-A- 4 430 316
- US-A1- 2010 319 254
- US-A1- 2013 036 911

## Beschreibung

### Gebiet der Erfindung

Die Erfindung betrifft ein Verfahren zur Abtrennung unerwünschter, insbesondere acider Gasbestandteile; beispielsweise Kohlendioxid und Schwefelwasserstoff, aus Rohsynthesegas durch Gaswäsche mit einem Waschmittel. Die Erfindung betrifft ferner eine Anlage zur Durchführung eines solchen Verfahrens.

### Stand der Technik

Verfahren zur Abtrennung von unerwünschten Begleitstoffen aus technischen Rohgasen mittels physikalischer oder chemischer Absorption oder Gaswäsche sind aus dem Stand der Technik wohlbekannt. So können mit solchen Verfahren unerwünschte, acide Bestandteile aus durch Vergasung, oder Reformierung von kohlen-stoffhaltigen Einsatzstoffen erzeugten Rohsynthesegasen, beispielsweise Kohlendioxid (CO₂) und Schwefelwasserstoff (H2S), aber auch weitere Bestandteile wie Carbonylsulfid (COS) und Cyanwasserstoff (HCN),von den erwünschten Synthesegasbestandteilen Wasserstoff (H₂) und Kohlenmonoxid (CO) sicher bis in den Spurenbereich entfernt werden. Ein bekanntes und häufig angewendetes Verfahren ist das Rectisol-Verfahren, das in Ullmann's Encyclopedia of Industrial Chemistry, 6. Aufl. Bd. 15, S. 399 ff. grundsätzlich beschrieben wird. Im Rectisol-Verfahren erfolgt die Aufnahme der oben erwähnten, unerwünschten Störkomponenten durch kaltes, d. h. signifikant unter Umgebungstemperatur abgekühltes Methanol als Absorbens oder Waschmittel, wobei in einer Absorberkolonne, auch als Waschkolonne bezeichnet, ein intensiver Stoffaustausch zwischen dem Rohgas und dem Absorptionsmittel bzw. Waschmittel erfolgt. Dabei erhöht sich die Löslichkeit der unerwünschten Gasbestandteile drastisch mit sinkender Temperatur des Methanols und zunehmendem Druck, während sie für Wasserstoff und Kohlenmonoxid praktisch konstant bleibt. Methanol hat zudem den Vorteil, selbst bei Temperaturen bis hinab zu -75 °C noch eine geringe Viskosität und somit gute Stoff- und Wärmeübertragungseigenschaften aufzuweisen.

Das als Waschmittel verwendete, mit den Störkomponenten beladene Methanol wird im Rectisol-Verfahren über Regenerierungsvorrichtungen im Kreis gefahren. In den Regenerierungsvorrichtungen wird das beladene Methanol von den absorbierten Gasen auf physikalischem Wege befreit. Dabei wird in einem ersten Regenerierungsschritt CO₂ durch Druckentspannung (sogenannte Flashregenerierung) und/oder Strippen mit einem Gas, beispielsweise Stickstoff, aus dem betadenen Methanol-Waschmittel entfernt. In einem weiteren oder alternativen Regenerierungsschritt werden die schwefelhaltigen Gase, COS und H₂S, durch Erhitzen abgetrieben (sogenannte Heissregenerierung). Häufig wird angestrebt, ein möglichst CO₂-freies COS/H₂S-Gas zu erzeugen, da dessen wirtschaftlich interessante Weiterverarbeitung durch eine Vermischung mit CO₂ beeinträchtigt wird.

Beim Rectisol-Verfahren wird zwischen dem Standardverfahren und dem selektiven Rectisol-Verfahren unterschieden. Bei dem Standard-Rectisol-Verfahren werden die Begleitgase COS/H₂S und das CO₂ gemeinsam in einem Absorptionsschritt aus dem Rohsynthesegas abgetrennt. Dagegen werden bei dem sogenannten selektiven Rectisol-Verfahren die schwefelhaltigen Begleitgase COS/H₂S und das CO₂ jeweils in separaten, nacheinander ablaufenden Absorptionsschritten aus dem Rohsynthesegas abgetrennt. Diese selektive Absorption wird durch eine geeignete Einstellung der Verfahrensparameter, insbesondere des Mengenverhältnisses von Waschmittel und zu absorbierendem Gas, ermöglicht. Der Vorteil der selektiven Absorption liegt darin, dass das COS/H₂S- und das CO₂-Gas schon bei der Absorption zum größten Teil getrennt gehalten werden und nur der kleinere Teil bei der Regenerierung des Methanols getrennt werden muss. Auf diese Weise wird zudem die Gewinnung des enthaltenen Schwefels mit Hilfe von nachgeschalteten Verfahren wie beispielsweise dem Claus-Verfahren ermöglicht.

Die Flashregenerierung des mit aciden Gasbestandteilen beladenen Waschmittels kann mehrstufig erfolgen, wobei bei der Entspannung mechanische Arbeit und Kälte gewonnen werden können. So wird in der US-Patentschrift US 5067 972 vorgeschlagen, bei einem Verfahren zur Abtrennung acider Bestandteile wie CO₂, H₂S und COS aus einem Gasstrom diesen mittels eines physikalischen Waschmittels zu behandeln. Das mit den aciden Gasbestandteilen beladene Waschmittel wird einer Kaskade von Flashbehältern mit stufenweise sinkendem Druck zugeführt und die dabei freiwerdenden Flashgase zwischen jeweils zwei Stufen einer mehrstufigen Entspannungsturbine zugeführt. Hierdurch werden mechanische Arbeit und Prozesskälte gewonnen. Das am Ende der Entspannungskaskade erhaltene Flashgas wird allerdings lediglich als Kühlmittel für das in das Verfahren eingeleitete Rohgas benutzt und dann aus dem Verfahren ausgeleitet. Nachteilig ist dabei, dass keine weitere, beispielsweise stoffliche Nutzung der erhaltenen Flashgase gelehrt wird.

Weiterer Stand der Technik wird in den Patentanmeldungen US 2010/319254 A1, DE 10 2012 023333 A1, DE 10 2008 057937 A1, US 4 430 316 A und EP 1 022 046 A1 offenbart.

### Beschreibung der Erfindung

Aufgabe der Erfindung ist es daher, ein Verfahren anzugeben, das die genannten Nachteile der aus dem Stand der Technik bekannten Verfahren vermeidet und bei dem insbesondere die erhaltenen Flashgase auch stofflich genutzt werden.

Diese Aufgabe wird im Wesentlichen durch ein Verfahren mit den Merkmalen des Anspruchs 1 gelöst. Weitere, insbesondere bevorzugte Ausgestaltungen des erfindungsgemäßen Verfahrens finden sich in den Unteransprüchen. Die Erfindung betrifft ferner eine Anlage zur Durchführung eines solchen Verfahrens.

### Erfindungsgemäßes Verfahren:

Verfahren zur Reinigung eines Rohsynthesegases durch Gaswäsche mit einem Waschmittel, umfassend folgende Schritte:
   (a) Bereitstellen und Zuführen des Rohsynthesegases zu einem Vorwäscher zur Entfernung von Spurenkomponenten wie NH₃, HCN, Mercaptane, BTX-Aromaten,
   (b) Zuführen des gasförmigen Kopfprodukts des Vorwäschers zu einem H₂S-Wäscher zur Entfernung von H₂S,
   (c) Zuführen des gasförmigen Kopfprodukts des H₂S-Wäschers zu einem CO₂-Wäscher zur Entfernung von CO₂,
   (d) Ausleiten eines gereinigten Synthesegasstroms als gasförmiges Kopfprodukt des CO₂-Wäschers,
   (e) Zuführen des flüssigen Sumpfprodukts des Vorwäschers zu einem Mitteldruck-Vorwäsche-Flashbehälter, Zuführen des gasförmigen Kopfprodukts des Mitteldruck-Vorwäsche-Flashbehälters zu einem Rekompressor, Zuführen des flüssigen Sumpfprodukts des Mitteldruck-Vorwäsche-Flashbehälters zu einem Niederdruck-Vorwäsche-Flashbehälter, Zuführen des gasförmigen Kopfprodukts des Niederdruck-Vorwäsche-Flashbehälters zum Rekompressor, Zuführen des flüssigen Sumpfprodukts des Niederdruck-Vorwäsche-Flashbehälters zu mindestens einer Vorrichtung zur Flashregenerierung und/oder Heissregenerierung des Waschmittels,
   (f) Zuführen des flüssigen Sumpfprodukts des H₂S-Wäschers zu einem Mitteldruck-H₂S-Flashbehälter, Zuführen des gasförmigen Kopfprodukts des Mitteldruck-H₂S-Flashbehälters zum Rekompressor, Zuführen des flüssigen Sumpfprodukts des Mitteldruck-H₂S-Flashbehälters zu einem Niederdruck-H₂S-Flashbehälter, Zuführen des gasförmigen Kopfprodukts des Niederdruck-H₂S-Flashbehälters zum Rekompressor, Zuführen des flüssigen Sumpfprodukts des Niederdruck-H₂S-Flashbehälters zu mindestens einer Vorrichtung zur Flashregenerierung und/oder Heissregenerierung des Waschmittels,
   (g) Zuführen des flüssigen Sumpfprodukts des CO₂-Wäschers zu einem Mitteldruck-CO₂-Fiashbehälter, Zuführen des gasförmigen Kopfprodukts des Mitteldruck-CO₂-Flashbehälters zum Rekompressor, Zuführen des flüssigen Sumpfprodukts des Mitteldruck-CO₂-Flashbehälters zu einem Niederdruck-CO₂-Flashbehälter, Zuführen des gasförmigen Kopfprodukts des Niederdruck-CO₂-Flashbehälters zum Niederdruck-H₂S-Flashbehälter und/oder zum Rekompressor, Zuführen des flüssigen Sumpfprodukts des Niederdruck-CO₂-Flashbehälters zu mindestens einer Vorrichtung zur Flashregenerierung und/oder Heissregenerierung des Waschmittels,
   (h) Rückführen des mittels des Rekompressors verdichteten Gasstroms zum Vorwäscher für das Rohsynthesegas.

### Erfindutigsgemäße Anlage:

Anlage zur Reinigung eines Rohsynthesegases durch Gaswäsche mit einem Waschmittel, umfassend folgende, in Fluidverbindung miteinander stehende Bestandteile und Baugruppen:
   (a) Mittel zum Bereitstellen und Zuführen des Rohsynthesegases zu einem Vorwäscher zur Entfernung von Spurenkomponenten wie NH₃, HCN, Mercaptane, BTX-Aromaten,
   (b) Mittel zum Zuführen des gasförmigen Kopfprodukts des Vorwäschers zu einem H₂S-Wäscher zur Entfernung von H₂S,
   (c) Mittel zum Zuführen des gasförmigen Kopfprodukts des H₂S-Wäschera zu einem CO₂-Wäscher zur Entfernung von CO₂,
   (d) Mittel zum Ausleiten eines gereinigten Synthesegasstroms als gasförmiges Kopfprodukt des CO₂-Wäschers,
   (e) Mittel zum Zuführen des flüssigen Sumpfprodukts zu einem Mitteldruck-Vorwäsche-Flashbehälter, Mittel zum Zuführen des gasförmigen Kopfprodukts des Mitteldruck-Vorwäsche-Flashbehätters zu einem Rekompressor, Mittel zum Zuführen des flüssigen Sumpfprodukts des Mitteldruck-Vorwäsche-Flashbehälters zu einem Niederdruck-Vorwäsche-Flashbehälter, Mittel zum Zuführen des gasförmigen Kopfprodukts des Niederdruck-Vorwäsche-Flashbehälters zum Rekompressor, Mittel zum Zuführen des flüssigen Sumpfprodukts des Niederdruck-Vorwäsche-Flashbehälters zu mindestens einer Vorrichtung zur Flashregenerierung und/oder Heissregenerierung des Waschmittels,
   (f) Mittel zum Zuführen des flüssigen Sumpfprodukts des H₂S-Wäschers zu einem Mitteldruck-H₂S-Flashbehälter, Mittel zum Zuführen des gasförmigen Kopfprodukts des Mitteldruck-H₂S-Flashbehälters zur zweiten oder einer nachfolgenden Stufe des mehrstufigen Rekompressors, Mittel zum Zuführen des flüssigen Sumpfprodukts des Mitteldruck-H₂S-Flashbehälters zu einem Niederdruck-H₂S-Flashbehälter, Mittel zum Zuführen des gasförmigen Kopfprodukts des Niederdruck-H_{2S}-Flashbehälters zum Rekompressor, Mittel zum Zuführen des flüssigen Sumpfprodukts des Niederdruck-H₂S-Flashbehälters zu mindestens einer Vorrichtung zur Flashregenerierung und/oder Heissregenerierung des Waschmittels,
   (g) Mittel zum Zuführen des flüssigen Sumpfprodukts des CO₂-Wäschers zu einem Mitteldruck-CO₂-Flashbehälter, Mittel zum Zuführen des gasförmigen Kopfprodukts des Mitteldruck-CO₂-Flashbehälters zum Rekompressor, Mittel zum Zuführen des flüssigen Sumpfprodukts des Mitteldruck-CO₂-Flashbehälters zu einem Niederdruck-CO₂-Flashbehälter, Mittel zum Zuführen des gasförmigen Kopfprodukts des Niederdruck-CO₂-Flashbehälters zum Niederdruck-H₂S-Flashbehälter und/oder zum Re-kompressor, Mittel zum Zuführen des flüssigen Sumpfprodukts des Niederdruck-CO₂-Flashbehälters zu mindestens einer Vorrichtung zur Flashregenerierung und/oder Heissregenerierung des Waschmittels,
   (h) Mittel zum Rückführen des mittels des Rekompressors verdichteten Gasstroms zum Vorwäscher für das Rohsynthesegas.

Unter Waschmittel, synonym Absorptionsmittel oder Lösungsmittel, werden im Rahmen der vorliegenden Erfindung Stoffe oder Stoffgemische verstanden, die unter Verfahrensbedingungen als Flüssigkeit vorliegen, eine Absorptionskapazität für die aus dem Gas abzuscheidenden Komponenten aufweisen und mittels physikalischer Methoden, beispielsweise durch Flashen oder mittels Heissregenerierung, regeneriert werden können.

Unter Flashen wird eine rasche, bevorzugt schlagartige Druckentspannung einer Flüssigkeit verstanden, die bevorzugt beim Eintreten in einen Behälter über einen Durchflussbegrenzer, beispielsweise ein Ventil, erfolgt. Die dabei freigesetzten Gase werden als Fiashgase bezeichnet.

Als Rekompressor wird ein ein- oder mehrstufiger Verdichter bezeichnet, dessen Aufgabe es ist, den Druck eines Gasstroms von einem niedrigen Wert auf einen höheren Wert, z. B. den Eintrittsdruck des Rohsynthesegases, zu erhöhen.

Das Zuführen eines Stoffstroms zum Expander umfasst auch dessen mindestens teilweises Zuführen, während der Rest des Stoffstroms beispielsweise zum Rekompressor geführt wird.

Der Vorwäscher, der H₂S-Wäscher und der CO₂-Wäscher müssen nicht zwangsweise als separate, über Rohrleitungen verbundene Apparate ausgeführt werden, sondern können im Sinne der vorliegenden Erfindung auch Abschnitte einer oder mehrerer integrierter Absorptionskolonnen sein.

Beim Rückführen des mittels des Rekompressors verdichteten Gasstroms zum Vorwäscher für das Rohsynthesegas kann der Gasstrom über eine separate Leitung direkt in den Vorwäscher geführt werden. Alternativ kann die Rückführleitung in die Rohsynthesegas-Zuführleitung einmünden, so dass eine Vormischurig des rückgeführten Gases mit dem Rohsynthesegas vor Eintreten in die Waschvorrichtung erfolgt.

Unter Fluidverbindung zwischen zwei Bereichen wird jegliche Art von Verbindung verstanden, die es ermöglicht, dass ein Fluid, beispielsweise das flüssige Waschmittel, von dem einen zu dem anderen der beiden Bereiche strömen kann, unbeachtlich etwaiger zwischengeschalteter Bereiche, Bauteile, Armaturen oder Vorrichtungen.

Unter Mitteln zum Bereitstellen, Zuführen oder Ausleiten von Stoffströmen zu bzw. aus Verfahrensstufen bzw. Anlagenteilen werden alle Vorrichtungen, Bauteile und Apparate verstanden, deren Nutzung der Fachmann in der jeweiligen Situation in Betracht zieht, insbesondere Vorratsbehälter, Rohrleitungen, Absperr- und Dosiervorrichtungen wie beispielsweise Ventile, Fördervorrichtungen wie beispielsweise Pumpen, Gebläse, Verdichter.

Etwaige Druckangaben in der Einheit bar(a) beziehen sich auf den Absolutdruck in bar, absolut, sofern nicht im Einzelfall anders angegeben.

Der Erfindung liegt die Erkenntnis zugrunde, dass die erhaltenen Flashgase durch Rückführen in das in das Gaswaschverfahren eintretende Rohsynthesegas auch stofflich genutzt werden können. Die Flashgase enthalten noch Anteile der Wertkomponenten CO und H₂ und können durch die erfindungsgemäße Rückführung zum Rohsynthesegas ebenfalls mindestens teilweise in die Synthesegas-Teilproduktströme gelangen. Auf diese Weise verbessert sich die Gesamtbilanz des Verfahrens für diese Wertkomponenten.

In einer speziellen Ausgestaltung des erfindungsgemäßen Verfahrens gemäß Anspruch 2 bzw. der erfindungsgemäßen Anlage gemäß Anspruch 6 wird nur ein Teil der Flashgase durch Rückführen in das in das Gaswaschverfahren eintretende Rohsynthesegas stofflich genutzt und ein anderer Teil zu einem Expander, beispielsweise einer mehrstufigen Entspannungsturbine, geführt. Auf diese Weise wird ein günstiger Kompromiss zwischen stofflicher und energetischer Nutzung der Flashgase erhalten.

### Weitere bevorzugte Ausgestaltungen der Erfindung

Eine bevorzugte Ausgestaltung des erfindungsgemäßen Verfahrens ist dadurch gekennzeichnet, dass das Waschmittel eine oder mehrere Komponenten ausgewählt aus der folgenden Gruppe enthält: Methanol, N-Methylpyrrolidon (NMP), sekundäre Amine, vorzugsweise Diethanolamin, tertiäre Amine, vorzugsweise Methyldiethanolamin, Polyethylenglycol-dialkylether, vorzugsweise Polyethylenglycol-dimethylether. Alle diese Absorptionsmittel dienen der Absorption von Kohlendioxid und Schwefelverbindungen, sind chemisch stabil und gegenüber den abzuscheidenden Stoffen chemisch inert und können mittels Druckentspannung bzw. Heissregenerierung regeneriert werden.

Als besonders vorteilhaft hat es sich herausgestellt, wenn der Rekompressor mehrstufig ausgeführt ist, wobei die gasförmigen Kopfprodukte aus den Niederdruck-Flashbehältern der ersten Stufe und die gasförmigen Kopfprodukte aus den Mitteldruck-Flashbehältern einer nachfolgenden Stufe des mehrstufigen Rekompressors zugeführt werden. Auf diese Weise werden die Flashgase energetisch optimiert verdichtet, da sie der entsprechenden, ein ähnliches Druckniveau aufweisenden Stufe des mehrstufigen Rekompressors zugeführt werden.

### Ausführungsbeispiel

Weitere Merkmale, Vorteile und Anwendungsmöglichkeiten der Erfindung ergeben sich auch aus der nachfolgenden Beschreibung von Ausführungsbeispielen und der Zeichnungen. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: eine schematische Darstellung des erfindungsgemäßen Verfahrens bzw. der erfindungsgemäßen Anlage nach einer ersten Ausgestaltung;
- Fig. 2: eine schematische Darstellung des erfindungsgemäßen Verfahrens bzw. der erfindungsgemäßen Anlage nach einer zweiten Ausgestaltung.

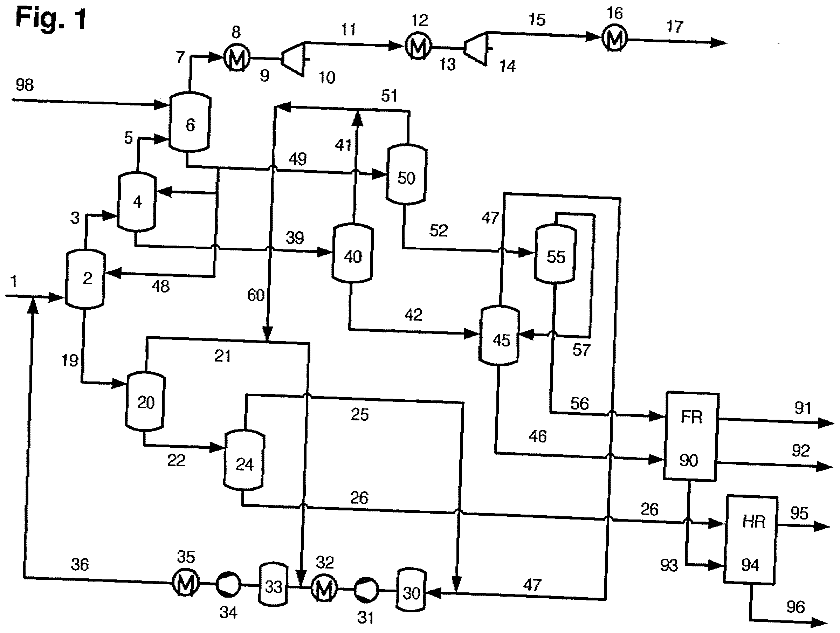

In der in Fig. 1 gezeigten, schematischen Darstellung des erfindungsgemäßen Verfahrens bzw. der erfindungsgemäßen Anlage nach einer ersten Ausgestaltung wird Rohsynthesegas über Leitung 1 einer Waschvorrichtung, umfassend die Wäscher 2, 4 und 6, zugeführt. Die einzelnen Wäscher 2, 4, 6 können dabei als separate Apparate oder auch als Bereiche einer integrierten Wasch- bzw. Absorptionskolonne ausgestaltet werden. Als Waschmittel wird im vorliegenden Ausführungsbeispiel kaltes Methanol verwendet, dass über Leitung 98 zu der Waschvorrichtung geführt wird. Dabei werden zumeist mehrere Methanolströme verschiedener Reinheits- bzw. Regenerierungsgrade der Waschvorrichtung an verschiedenen Stellen in dem Fachmann bekannter Weise zugeführt (bildlich nicht dargestellt).

Über Leitung 1 tritt das Rohsynthesegas mit einem typischen Druck von 20 bis 70 bar(a) in den Vorwäscher 2 zur Entfernung von Spurenkomponenten wie NH₃ und HCN ein und wird dort mittels über Leitung 48 herangeführtes, mit aciden Gasbestandteilen teilbeladenes Methanol gewaschen. Das Kopfprodukt des Vorwäschers 2 wird über Leitung 3 dem H₂S-Wäscher 4 zugeführt und dort ebenfalls mit teilbeladenem Methanol gewaschen. Das Kopfprodukt des H₂S-Wäschers 4 wird über Leitung 5 dem CO₂-Wäscher 6 zugeführt und dort mit Methanol hoher Reinheit gewaschen, das über Leitung 98 herangeführt und durch heißregeneriertes Methanol, frisches Reinmethanol oder Mischungen davon gebildet wird. Das Kopfprodukt des CO₂-Wäschers 6 wird über Leitung 7 einem als zweistufige Entspannungsturbine ausgestalteten Expander, umfassend die Kühler 8, 12, 16, die Turbinenstufen 10, 14 und die internen Leitungen 9, 11, 13, 15, zugeführt. In diesem wird das gereinigte Synthesegas auf einen Druck von typischerweise 5 bar(a) entspannt, wobei Kälte und mechanische Arbeit zurückgewonnen werden. Nicht bildlich dargestellt sind üblicherweise vorhandene Kondensatabscheider nach jeder Entspannungsstufe. Hier anfallendes Kondensat wird dabei an eine Stelle der Anlage zurückgeführt, in der Flüssigkeiten bei ähnlichem Druck verarbeitet werden; üblicherweise sind, dies Flashbehälter. Über Leitung 17 wird das entspannte Reinsynthesegas aus dem Verfahren ausgeleitet und der weiteren Behandlung oder Verarbeitung zugeführt.

Das im Vorwäscher 2 mit Spurenkomponenten wie NH₃ und HCN beladene Methanol-Waschmittel wird über Leitung 19 dem Mitteldruck-Vorwäsche-Flashbehälter 20 zugeführt und dort auf typischerweise 15 bis 40 bar(a) entspannt. Das dabei erhaltene, gasförmige Kopfprodukt wird über Leitung 21 zur zweiten Stufe eines Rekompressors geführt, der die Kühler 32, 35, die Verdichterstufen 31, 34 und die Abscheider 30, 33 umfasst. Das flüssige Sumpfprodukt des Mitteldruck-Vorwäsche-Flashbehälters 20 wird über Leitung 22 zu einem Niederdruck-Vorwäsche-Flashbehälter 24 geführt und dort auf typischerweise 1,5 bis 15 bar(a) entspannt. Das dabei erhaltene, gasförmige Kopfprodukt wird über Leitung 25 zur ersten Stufe des Rekompressors geführt und dort in den Abscheider, 30 eingeführt. Das flüssige Sumpfprodukt des Niederdruck-Vorwäsche-Flashbehälters 24 wird über Leitung 26 zu einer Heissregenerierungsvörrichtung 94 geführt.

Das im H₂S-Wäscher 4 mit Schwefelwasserstoff beladene Methanol-Waschmittel wird über Leitung 39 einem Mitteldruck-H₂S-Flashbehälter 40 zugeführt und dort auf typischerweise 15 bis 40 bar(a) entspannt. Das dabei erhaltene, gasförmige Kopfprodukt wird über Leitungen 41 , 51,60 und 21 zur zweiten Stufe des Rekompressors geführt. Das flüssige Sumpfprodukt des Mitteldruck-H₂S-Flashbehälters 40 wird über Leitung 42 zu einem Niederdruck-H₂S-Flashbehälter 45 geführt und dort auf typischerweise 1,5 bis 15 bar(a) entspannt. Das dabei erhaltene, gasförmige Kopfprodukt wird über Leitung 47 zur ersten Stufe des Rekompressors geführt und dort in den Abscheider 30 eingeführt. Das flüssige Sumpfprodukt des Niederdruck-H₂S-Flashbehälters 45 wird über Leitung 46 zu einer Flashregenerierungsvorrichtung 90 geführt.

Das im CO₂-Wäscher 6 mit Kohlendioxid beladene Methanol-Waschmittel wird über Leitung 49 einem Mitteldruck-CO₂-Flashbehälter 50 zugeführt und dort auf typischerweise 15 bis 40 bar(a) entspannt. Das dabei erhaltene, gasförmige Kopfprodukt wird über Leitungen 51, 60 und 21 zur zweiten Stufe des Rekompressors geführt. Das flüssige Sumpfprodukt des Mitteldruck-CO₂-Flashbehälters 50 wird über Leitung 52 zu einem Niederdruck-CO₂-Flashbehälter 55 geführt und dort auf typischerweise 1,5 bis 15 bar(a) entspannt. Das dabei erhaltene, gasförmige Kopfprodukt wird über Leitung 57 zum Niederdruck-HzS-Flashbehälter 45 geführt und dort mit dessen Kopfprodukt zusammengeführt. Das flüssige Sumpfprodukt des Niederdruck-CO₂-Flashbehälters 55 wird über Leitung 56 zu der Flashregenerierungsvorrichtung 90 geführt.

Die in den zweistufigen Rekompressor eintretenden Gasströme werden in zwei Druckstufen auf das Druckniveau des Rohsynthesegases verdichtet und über Leitungen 36 und 1 zum Vorwäscher 2 zurückgeführt. Es ist auch möglich, Leitung 36 direkt in den Vorwäscher 2 zu führen.

Das in die Flashregenerierungsvorrichtung 90 einführte, beladene Methanol-Waschmittel wird dort entspannt. Die Entspannung erfolgt in mehreren, bildlich nicht dargestellten Stufen, wobei schließlich ein CO₂-Produktstrom mit hoher CO₂₅-Reinheit und ein CO₂-Abgasstrom mit geringerer CO₂-Reinheit erhalten und über Leitungen 91 und 92 aus dem Verfahren ausgeleitet werden. Die dabei erforderliche Vorgehensweise und verwendeten Druckstufen sind dem Fachmann an sich bekannt. Ferner wird ein im Wesentlichen mit Schwefelwasserstoff beladenes Methanol-Waschmittel erhalten, das über Leitung 93 zu der Heissregenerierungsvorrichtung 94 geführt wird. Auch diese ist mehrstufig ausgestaltet und bildlich nur schematisch dargestellt, wobei die einzelnen Verfahrensschritte und Verfahrensbedingungen der Heissregenerierung dem Fachmann bekannt sind. Als Produkt der Heissregenerierung wird ein Methanol-Waschmittelstrom hoher Reinheit (sog. Feinwasch-Methanol) erhalten, der - gegebenenfalls nach weiteren Behandlungsschritten und unter Zugabe von Frischmethanol - über Leitung 98 zum CO₂-Wäscher 6 zurückgeführt wird. Ferner wird als weiteres Produkt der Heissregenerierung ein Sauergasstrom erhalten, der Schwefelwasserstoff sowie weitere Schwefelkomponenten enthält und über Leitung 95 aus dem Verfahren ausgeleitet und der weiteren Behandlung oder Verarbeitung zugeführt wird. Üblicherweise wird der Sauergasstrom einer nicht bildlich dargestellten, beispielsweise nach dem Claus-Verfahren arbeitenden Schwefelrückgewinnungsanlage zugeführt.

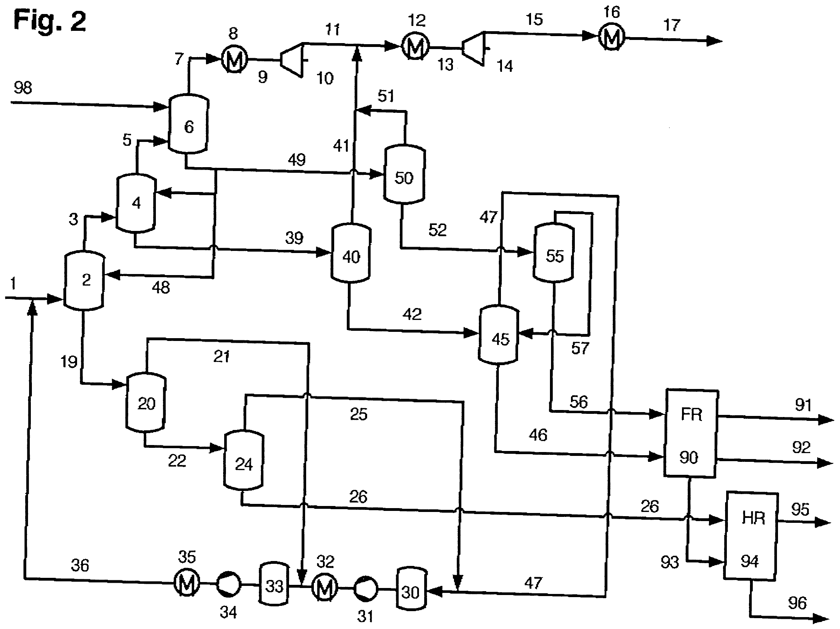

Die in Fig. 2 gezeigte, schematische Darstellung des erfindungsgemäßen Verfahrens bzw. der erfindungsgemäßen Anlage nach einer zweiten Ausgestaltung entspricht weitegehend der Ausgestaltung gemäß Fig. 1. Im Unterschied zu letzterer werden die Kopfprodukte des Mitteldruck-H₂S-Flashbehälters 40 und des Mitteldruck-CO₂-Flashbehälter 50 über Leitungen 41 und 51 zur zweiten Stufe des zweistufigen Expanders geführt. In dieser speziellen Ausgestaltung wird somit nur ein Teil der Flashgase aus dem Mitteldruck-H₂S-Flashbehälter und dem Mitteldruck-CO₂-Flashbehälter durch Rekomprimieren und Rückführen zu dem in das Gaswaschverfahren eintretende Rohsynthesegas stofflich genutzt, wobei der verbliebene Anteil der Flashgase zur Rückgewinnung von Kälte und mechanischer Arbeit zurückgewonnen dient und somit energetisch genutzt wird. Auf diese Weise wird ein günstiger Kompromiss zwischen stofflicher und energetischer Nutzung der Flashgase erhalten.

Es ist auch möglich, nur einen Teil der Kopfprodukte des Mitteldruck-H₂S-Flashbehälters 40 und des Mitteldruck-CO₂-Flashbehäfter 50 über Leitungen 41 und 51 zur zweiten Stufe des zweistufigen Expanders zu führen, während der verbliebene Anteil zum Rekompressor geführt wird. Auf diese Weise wird eine Regelbarkeit zwischen stofflicher und energetischer Nutzung der Flashgase ermöglicht.

### Gewerbliche Anwendbarkeit

Mit der Erfindung wird ein Gaswaschverfahren und eine korrespondierende Anlage zur Abtrennung acider Gasbestandteile aus Rohsynthesegas zur Verfügung gestellt, die es ermöglichen, die bei der Entspannung des beladenen Waschmittels erhaltenen Flashgase in vorteilhafter Weise stofflich und/oder energetisch, nämlich zur Rückgewinnung von Kälte und mechanischer Arbeit zu nutzen.

### Bezugszeichenliste

- 1: Leitung
- 2: Vorwäscher
- 3: Leitung
- 4: H₂S-Wäscher
- 5: Leitung
- 6: CO₂-Wäscher
- 7: Leitung
- 8: Kühler (Wärmetauscher)
- 9: Leitung
- 10: Turbinenstufe
- 11: Leitung
- 12: Kühler (Wärmetauscher)
- 13: Leitung
- 14: Turbinenstufe
- 15: Leitung
- 16: Kühler (Wärmetauscher)
- 17: Leitung
- 19: Leitung
- 20: Mitteldruck-Vorwäsche-Flashbehälter
- 21: Leitung
- 22: Leitung
- 24: Niederdruck-Vorwäsche-Flashbehälter
- 25: Leitung
- 26: Leitung
- 30: Abscheider
- 31: Verdichterstufe
- 32: Kühler (Wärmetauscher)
- 33: Abscheider
- 34: Verdichterstufe
- 35: Kühler (Wärmetauscher)
- 36: Leitung
- 39: Leitung
- 40: Mitteldruck-H₂S-Flashbehälter 40
- 41: Leitung,
- 42: Leitung
- 45: Niederdruck-H₂S-Flashbehälter
- 46: Leitung
- 47: Leitung
- 49: Leitung
- 50: Mitteldruck-CO₂-Flashbehälter
- 51: Leitung
- 52: Leitung
- 55: Niederdruck-CO₂-Flashbehälter
- 56: Leitung
- 57: Leitung
- 60: Leitung
- 90: Flashregenerierungsvorrichtung
- 91: Leitung
- 92: Leitung
- 93: Leitung
- 94: Heissregenerierungsvorrichtung
- 95: Leitung
- 96: Leitung
- 98: Leitung

## Patentansprüche

1. Verfahren zur Reinigung eines Rohsynthesegases durch Gaswäsche mit einem Waschmittel, umfassend folgende Schritte:
(a) Bereitstellen und Zuführen des Rohsynthesegases zu einem Vorwäscher zur Entfemung von Spurenkomponenten wie NH₃ und HCN,
(b) Zuführen des gasförmigen Kopfprodukts des Vorwäschers zu einem H₂S-Wäscher zur Entfemung von H₂S,
(c) Zuführen des gasförmigen Kopfprodukts des H₂S-Wäschers zu einem CO₂-Wäscher zur Entfernung von CO₂,
(d) Ausleiten eines gereinigten Synthesegasstroms als gasförmiges Kopfprodukt des CO₂-Wäschers,
(e) Zuführen des flüssigen Sumpfprodukts des Vorwäschers zu einem Mitteldruck-Vorwäsche-Flashbehälter, Zuführen des gasförmigen Kopfprodukts des Mitteldruck-Vorwäsche-Flashbehälters zu einem Rekompressor, Zuführen des flüssigen Sumpfprodukts des Mitteldruck-Vorwäsche-Flashbehälters zu einem Niederdruck-Vorwäsche-Flashbehälter, Zuführen des gasförmigen Kopfprodukts des Niederdruck-Vorwäsche-Flashbehälters zum Rekompressor, Zuführen des flüssigen Sumpfprodukts des Niederdruck-Vorwäsche-Flashbehälters zu mindestens einer Vorrichtung zur Flashregenerierung und/oder Heissregenerierung des Waschmittels,
(f) Zuführen des flüssigen Sumpfprodukts des H₂S-Wäschers zu einem Mitteldruck-H₂S-Flashbehälter, Zuführen des gasförmigen Kopfprodukts des Mitteldruck-H₂S-Flashbehälters zum Rekompressor, Zuführen des flüssigen Sumpfprodukts des Mitteldruck-H₂S-Flashbehälters zu einem Niederdruck-H₂S-Flashbehälter, Zuführen des gasförmigen Kopfprodukts des Niederdruck-H₂S-Flashbehälters zum Rekompressor, Zuführen des flüssigen Sumpfprodukts des Niederdruck-H₂S-Flashbehälters zu mindestens einer Vorrichtung zur Flashregenerierung und/oder Heissregenerierung des Waschmittels,
(g) Zuführen des flüssigen Sumpfprodukts des CO₂-Wäschers zu einem Mitteldruck-CO₂-Flashbehälter, Zuführen des gasförmigen Kopfprodukts des Mitteldruck-CO₂-Flashbehälters zum Rekompressor, Zuführen des flüssigen Sumpfprodukts des Mitteldruck-CO₂-Flashbehälters zu einem Niederdruck-CO₂-Flashbehälter, Zuführen des gasförmigen Kopfprodukts des Niederdruck-CO₂-Flashbehälters zum Niederdruck-H₂S-Flashbehälter und/oder zum Rekompressor, Zuführen des flüssigen Sumpfprodukts des Niederdruck-CO₂-Flashbehälters zu mindestens einer Vorrichtung zur Flashregenerierung und/oder Heissregenerierung des Waschmittels,
(h) Rückführen des mittels des Rekompressors verdichteten Gasstroms zum Vorwäscher für das Rohsynthesegas.

2. Verfahren zur Reinigung eines Rohsynthesegases durch Gaswäsche mit einem Waschmittel, umfassend folgende Schritte:
(a) Bereitstellen und Zuführen des Rohsynthesegases zu einem Vorwäscher zur Entfernung von Spurenkomponenten wie NH₃ und HCN,
(b) Zuführen des gasförmigen Kopfprodukts des Vorwäschers zu einem H₂S-Wäscher zur Entfernung von H₂S,
(c) Zuführen des gasförmigen Kopfprodukts des H₂S-Wäschers zu einem CO₂-Wäscher zur Entfernung von CO₂,
(d) Einleiten mindestens eines Teils des gasförmigen Kopfprodukts des CO₂-Wäschers in einen vorzugsweise mehrstufigen Expander, wobei mechanische Arbeit und Kälte gewonnen werden und ein expandierter, gereinigter Synthesegasstrom aus dem Expander ausgeleitet wird,
(e) Zuführen des flüssigen Sumpfprodukts des Vorwäschers zu einem Mitteldruck-Vorwäsche-Flashbehälter, Zuführen des gasförmigen Kopfprodukts des Mitteldruck-Vorwäsche-Flashbehälters zu einem Rekompressor, Zuführen des flüssigen Sumpfprodukts des Mitteldruck-Vorwäsche-Flashbehälters zu einem Niederdruck-Vorwäsche-Flashbehälter, Zuführen des gasförmigen Kopfprodukts des Niederdruck-Vorwäsche-Flashbehälters zum Rekompressor, Zuführen des flüssigen Sumpfprodukts des Niederdruck-Vorwäsche-Flashbehälters zu mindestens einer Vorrichtung zur Flashregenerierung und/oder Heissregenerierung des Waschmittels,
(f) Zuführen des flüssigen Sumpfprodukts des H₃S-Wäschers zu einem Mitteldruck-H₂S-Flashbehälter, Zuführen des gasförmigen Kopfprodukts des Mitteldruck-H₂S-Flashbehälters zur ersten oder einer nachfolgenden Stufe des mehrstufigen Expanders oder in die Leitung stromabwärts des Expanders, Zuführen des flüssigen Sumpfprodukts des Mitteldruck-H₂S-Flashbehälters zu einem Niederdruck-H₂S-Flashbehälter, Zuführen des gasförmigen Kopfprodukts des Niederdruck-H₂S-Flashbehälters zum Rekompressor, Zuführen des flüssigen Sumpfprodukts des Niederdruck-H₂S-Flashbehälters zu mindestens einer Vorrichtung zur Flashregenerierung und/oder Heissregenerierung des Waschmittels,
(g) Zuführen des flüssigen Sumpfprodukts des CO₂-Wäschets zu einem Mitteldruck-CO₂-Flashbehälter, Zuführen des gasförmigen Kopfprodukts des Mitteldruck-CO₂-Flashbehälters zur ersten oder einer nachfolgenden Stufe des mehrstufigen Expanders oder in die Leitung stromabwärts des Expanders, Zuführen des flüssigen Sumpfprodukts des Mitteldruck-CO₂-Flashbehälters zu einem Niederdruck-CO₂-Flashbehälter, Zuführen des gasförmigen Kopfprodukts des Niederdruck-CO₂-Flashbehälters zum Niederdruck-H₂S-Flashbehälter und/oder zum Rekompressor, Zuführen des flüssigen Sumpfprodukts des Niederdruck-CO₂-Flashbehälters zu mindestens einer Vorrichtung zur Flashregenerierung und/oder Heissregenerierung des Waschmittels,
(h) Rückführen des mittels des Rekompressors verdichteten Gasstroms zum Vorwäscher für das Rohsynthesegas.

3. Verfahren gemäß Anspruch 1 oder 2, **dadurch gekennzeichnet, dass** das Waschmittel eine oder mehrere Komponenten ausgewählt aus der folgenden Gruppe enthält: Methanol, N-Methylpyrrolidon (NMP), sekundäre Amine, vorzugsweise Diethanolamin, tertiäre Amine, vorzugsweise Methyldiethanolamin, Polyethylenglycol-dialkylether, vorzugsweise Polyethylenglycol-dimethylether.

4. Verfahren nach einem der vorigen Ansprüche, **dadurch gekennzeichnet, dass** der Rekompressor mehrstufig ausgeführt ist, wobei die gasförmigen Kopfprodukte aus den Niederdruck-Flashbehältern der ersten Stufe und die gasförmigen Kopfprodukte aus den Mitteldruck-Flashbehältern einer nachfolgenden Stufe des mehrstufigen Rekompressors zugeführt werden,

5. Anlage zur Reinigung eines Rohsynthesegases durch Gaswäsche mit einem Waschmittel, umfassend folgende Bestandteile und Baugruppen:
(a) Mittel zum Bereitstellen und Zuführen des Rohsynthesegases zu einem Vorwäscher zur Entfernung von Spurenkomponenten wie NH₃, HCN, Mercaptane, BTX-Aromaten,
(b) Mittel zum Zuführen des gasförmigen Kopfprodukts des Vorwäschers zu einem H₂S-Wäscher zur Entfernung von H₂S,
(c) Mittel zum Zuführen des gasförmigen Kopfprodukts des H₂S-Wäschera zu einem CO₂-Wäscher zur Entfernung von CO₂,
(d) Mittel zum Ausleiten eines gereinigten Synthesegasstroms als gasförmiges Kopfprodukt des CO₂-Wäschers,
(e) Mittel zum Zuführen des flüssigen Sumpfprodukts zu einem Mitteldruck-Vorwäsche-Flashbehälter, Mittel zum Zuführen des gasförmigen Kopfprodukts des Mitteldruck-Vorwäsche-Flashbehälters zu einem Rekompressor, Mittel zum Zuführen des flüssigen Sumpfprodukts des Mitteldruck-Vorwäsche-Flashbehälters zu einem Niederdruck-Vorwäsche-Flashbehälter, Mittel zum Zuführen des gasförmigen Kopfprodukts des Niederdruck-Vorwäsche-Flashbehälters zum Rekompressor, Mittel zum Zuführen des flüssigen Sumpfprodukts des Niederdruck-Vorwäsche-Flashbehälters zu mindestens einer Vorrichtung zur Flashregenerierung und/oder Heissregenerierung des Waschmittels,
(f) Mittel zum Zuführen des flüssigen Sumpfprodukts des H₂S-Wäschers zu einem Mitteldruck-H₂S-Flashbehälter, Mittel zum Zuführen des gasförmigen Kopfprodukts des Mitteldruck-H₂S-Flashbehälters Rekompressors zum Rekompressor, Mittel zum Zuführen des flüssigen Sumpfprodukts des Mitteldruck-H₂S-Flashbehälters zu einem Niederdruck-H₂S-Flashbehälter, Mittel zum Zuführen des gasförmigen Kopfprodukts des Niederdruck-H₂S-Flashbehälters zum Rekompressor, Mittel zum Zuführen des flüssigen Sumpfprodukts des Niederdruck-H₂S-Flashbehälters zu mindestens einer Vorrichtung zur Flashregenerierung und/oder Heissregenerierung des Waschmittels,
(g) Mittel zum Zuführen des flüssigen Sumpfprodukts des CO₂-Wäschers zu einem Mitteldruck-CO₂-Flashbehälter, Mittel zum Zuführen des gasförmigen Kopfprodukts des Mitteldruck-CO₂-Flashbehälters zum Rekompressor, Mittel zum Zuführen des flüssigen Sumpfprodukts des Mitteldruck-CO₂-Flashbehälters zu einem Niederdruck-CO₂-Flashbehälter, Mittel zum Zuführen des gasförmigen Kopfprodukts des Niederdruck-CO₂-Flashbehälters zum Niederdruck-H₂S-Flashbehälter und/oder zum Rekompressor, Mittel zum Zuführen des flüssigen Sumpfprodukts des Niederdruck-CO₂-Flashbehälters zu mindestens einer Vorrichtung zur Flashregenerierung und/oder Heissregenerierung des Waschmittels,
(h) Mittel zum Rückführen des mittels des Rekompressors verdichteten Gasstroms zum Vorwäscher für das Rohsynthesegas.

6. Anlage zur Reinigung eines Rohsynthesegases durch Gaswäsche mit einem Waschmittel, umfassend folgende Bestandteile und Baugruppen:
(a) Mittel zum Bereitstellen und Zuführen des Rohsynthesegases zu einem Vorwäscher zur Entfernung von Spurenkomponenten wie NH₃, HCN, Mercaptane, BTX-Aromaten,
(b) Mittel zum Zuführen des gasförmigen Kopfprodukts des Vorwäschers zu einem H₂S-Wäscher zur Entfernung von H₂S,
(c) Mittel zum Zuführen des gasförmigen Kopfprodukts des H₂S-Wäschera zu einem CO₂-Wäscher zur Entfernung von CO₂,
(d) einen mehrstufigen Expander, Mittel zum Einleiten mindestens eines Teils des gasförmigen Kopfprodukts des CO₂-Wäschers in den mehrstufigen Expander, wobei mechanische Arbeit und Kälte gewonnen werden, Mittel zum Ausleiten eines expandierten, gereinigten Synthesegasstroms aus dem Expander,
(e) Mittel zum Zuführen des flüssigen Sumpfprodukts zu einem Mitteldruck-Vorwäsche-Flashbehälter, Mittel zum Zuführen des gasförmigen Kopfprodukts des Mitteldruck-Vorwäsche-Flashbehälters zu einem Rekompressor, Mittel zum Zuführen des flüssigen Sumpfprodukts des Mitteldruck-Vorwäsche-Flashbehälters zu einem Niedendruck-Vorwäsche-Flashbehälter, Mittel zum Zuführen des gasförmigen Kopfprodukts des Niederdruck-Vorwäsche-Flashbehälters zum Rekompressor, Mittel zum Zuführen des flüssigen Sumpfprodukts des Niederdruck-Vorwäsche-Flashbehälters zu mindestens einer Vorrichtung zur Flashregenerierung und/oder Heissregenerierung des Waschmittels,
(f) Mittel zum Zuführen des flüssigen Sumpfprodukts des H₂S-Wäschers zu einem Mitteldruck-H₂S-Flashbehälter, Mittel zum Zuführen des gasförmigen Kopfprodukts des Mitteldruck-H₂S-Flashbehälters zur ersten oder einer nachfolgenden Stufe des mehrstufigen Expanders oder in die Leitung stromabwärts des Expanders, Mittel zum Zuführen des flüssigen Sumpfprodukts des Mitteldruck-H₂S-Flashbehälters zu einem Niederdruck-H₂S-Flashbehälter, Mittel zum Zuführen des gasförmigen Kopfprodukts des Niederdruck-H₂S-Flashbehälters zum Rekompressor, Mittel zum Zuführen des flüssigen Sumpfprodukts des Niederdruck-H₂S-Flashbehälters zu mindestens einer Vorrichtung zur Flashregenerierung und/oder Heissregenerierung des Waschmittels,
(g) Mittel zum Zuführen des flüssigen Sumpfprodukts des CO₂-Wäschers zu einem Mitteldruck-CO₂-Flashbehälter, Mittel zum Zuführen des gasförmigen Kopfprodukts des Mitteldruck-CO₂-Flashbehälters zur ersten oder einer nachfolgenden Stufe des mehrstufigen Expanders oder in die Leitung stromabwärts des Expanders, Mittel zum Zuführen des flüssigen Sumpfprodukts des Mitteldruck-CO₂-Flashbehälters zu einem Niederdruck-CO₂-Flashbehälter, Mittel zum Zuführen des gasförmigen Kopfprodukts des Niederdruck-CO₂-Flashbehälters zum Niederdruck-H₂S-Flashbehälter und/oder zum Rekompressor, Mittel zum Zuführen des flüssigen Sumpfprodukts des Niederdruck-CO₂-Flashbehälters zu mindestens einer Vorrichtung zur Flashregenerierung und/oder Heissregenerierung des Waschmittels,
(h) Mittel zum Rückführen des mittels des Rekompressors verdichteten Gasstroms zum Vorwäscher für das Rohsynthesegas.

## Claims

1. Process for purifying a crude synthesis gas by gas scrubbing with a scrubbing medium comprising the steps of:
(a) providing and supplying the crude synthesis gas to a prescrubber for removal of trace components such as NH₃ and HCN,
(b) supplying the gaseous tops product from the prescrubber to an H₂S scrubber for removal of H₂S,
(c) supplying the gaseous tops product from the H₂S scrubber to a CO₂ scrubber for removal of CO₂,
(d) discharging a purified synthesis gas stream as a gaseous tops product from the CO₂ scrubber,
(e) supplying the liquid bottoms product from the prescrubber to an intermediate-pressure prescrubbing flash vessel, supplying the gaseous tops product from the intermediate-pressure prescrubbing flash vessel to a recompressor, supplying the liquid bottoms product from the intermediate-pressure prescrubbing flash vessel to a low-pressure prescrubbing flash vessel, supplying the gaseous tops product from the low-pressure prescrubbing flash vessel to the recompressor, supplying the liquid bottoms product from the low-pressure prescrubbing flash vessel to at least one apparatus for flash regeneration and/or hot regeneration of the scrubbing medium,
(f) supplying the liquid bottoms product from the H₂S scrubber to an intermediate-pressure H₂S flash vessel, supplying the gaseous tops product from the intermediate-pressure H₂S flash vessel to the recompressor, supplying the liquid bottoms product from the intermediate-pressure H₂S flash vessel to a low-pressure H₂S flash vessel, supplying the gaseous tops product from the low-pressure H₂S flash vessel to the recompressor, supplying the liquid bottoms product from the low-pressure H₂S flash vessel to at least one apparatus for flash regeneration and/or hot regeneration of the scrubbing medium,
(g) supplying the liquid bottoms product from the CO₂ scrubber to an intermediate-pressure CO₂ flash vessel, supplying the gaseous tops product from the intermediatee pressure CO₂ flash vessel to the recompressor, supplying the liquid bottoms product from the intermediate-pressure CO₂ flash vessel to a low-pressure CO₂ flash vessel, supplying the gaseous tops product from the low-pressure CO₂ flash vessel to the low-pressure H₂S flash vessel and/or to the recompressor, supplying the liquid bottoms product from the low-pressure CO₂ flash vessel to at least one apparatus for flash regeneration and/or hot regeneration of the scrubbing medium,
(h) recycling the gas stream compressed by the recompressor to the prescrubber for the crude synthesis gas.

2. Process for purifying a crude synthesis gas by gas scrubbing with a scrubbing medium comprising the steps of:
(a) providing and supplying the crude synthesis gas to a prescrubber for removal of trace components such as NH₃ and HCN,
(b) supplying the gaseous tops product from the prescrubber to an H₂S scrubber for removal of H₂S,
(c) supplying the gaseous tops product from the H₂S scrubber to a CO₂ scrubber for removal of CO₂,
(d) introducing at least some of the gaseous tops product from the CO₂ scrubber into a preferably multi-stage expander to recover mechanical work and refrigeration and to discharge an expanded, purified synthesis gas stream from the expander,
(e) supplying the liquid bottoms product from the prescrubber to an intermediate-pressure prescrubbing flash vessel, supplying the gaseous tops product from the intermediate-pressure prescrubbing flash vessel to a recompressor, supplying the liquid bottoms product from the intermediate-pressure prescrubbing flash vessel to a low-pressure prescrubbing flash vessel, supplying the gaseous tops product from the low-pressure prescrubbing flash vessel to the recompressor, supplying the liquid bottoms product from the low-pressure prescrubbing flash vessel to at least one apparatus for flash regeneration and/or hot regeneration of the scrubbing medium,
(f) supplying the liquid bottoms product from the H₂S scrubber to an intermediate-pressure H₂S flash vessel, supplying the gaseous tops product from the intermediate-pressure H₂S flash vessel to the first stage or a subsequent stage of the multi-stage expander or into the conduit downstream of the expander, supplying the liquid bottoms product from the intermediate-pressure H₂S flash vessel to a low-pressure H₂S flash vessel, supplying the gaseous tops product from the low-pressure H₂S flash vessel to the recompressor, supplying the liquid bottoms product from the low-pressure H₂S flash vessel to at least one apparatus for flash regeneration and/or hot regeneration of the scrubbing medium,
(g) supplying the liquid bottoms product from the CO₂ scrubber to an intermediate-pressure CO₂ flash vessel, supplying the gaseous tops product from the intermediate-pressure CO₂ flash vessel to the first stage or a subsequent stage of the multi-stage expander or into the conduit downstream of the expander, supplying the liquid bottoms product from the intermediate-pressure CO₂ flash vessel to a low-pressure CO₂ flash vessel, supplying the gaseous tops product from the low-pressure CO₂ flash vessel to the low-pressure H₂S flash vessel and/or to the recompressor, supplying the liquid bottoms product from the low-pressure CO₂ flash vessel to at least one apparatus for flash regeneration and/or hot regeneration of the scrubbing medium,
(h) recycling the gas stream compressed by the recompressor to the prescrubber for the crude synthesis gas.

3. Process according to Claim 1 or 2, **characterized in that** the scrubbing medium comprises one or more components selected from the group of: methanol, N-methylpyrrolidone (NMP), secondary amines, preferably diethanolamine, tertiary amines, preferably methyldiethanolamine, polyethylene glycol dialkyl ethers, preferably polyethylene glycol dimethyl ether.

4. Process according to any of the preceding claims, **characterized in that** the recompressor is a multi-stage recompressor, wherein the gaseous tops products from the low-pressure flash vessels are supplied to the first stage and the gaseous tops products from the intermediate-pressure flash vessels are supplied to a subsequent stage of the multi-stage recompressor.

5. Plant for purifying a crude synthesis gas by gas scrubbing with a scrubbing medium comprising the following constituents and assemblies:
(a) means for providing and supplying the crude synthesis gas to a prescrubber for removal of trace components such as NH₃, HCN, mercaptans, BTX aromatics,
(b) means for supplying the gaseous tops product from the prescrubber to an H₂S scrubber for removal of H₂S,
(c) means for supplying the gaseous tops product from the H₂S scrubber to a CO₂ scrubber for removal of CO₂,
(d) means for discharging a purified synthesis gas stream as a gaseous tops product from the CO₂ scrubber,
(e) means for supplying the liquid bottoms product to an intermediate-pressure prescrubbing flash vessel, means for supplying the gaseous tops product from the intermediate-pressure prescrubbing flash vessel to a recompressor, means for supplying the liquid bottoms product from the intermediate-pressure prescrubbing flash vessel to a low-pressure prescrubbing flash vessel, means for supplying the gaseous tops product from the low-pressure prescrubbing flash vessel to the recompressor, means for supplying the liquid bottoms product from the low-pressure prescrubbing flash vessel to at least one apparatus for flash regeneration and/or hot regeneration of the scrubbing medium,
(f) means for supplying the liquid bottoms product from the H₂S scrubber to an intermediate-pressure H₂S flash vessel, means for supplying the gaseous tops product from the intermediate-pressure H₂S flash vessel to the recompressor, means for supplying the liquid bottoms product from the intermediate-pressure H₂S flash vessel to a low-pressure H₂S flash vessel, means for supplying the gaseous tops product from the low-pressure H₂S flash vessel to the recompressor, means for supplying the liquid bottoms product from the low-pressure H₂S flash vessel to at least one apparatus for flash regeneration and/or hot regeneration of the scrubbing medium,
(g) means for supplying the liquid bottoms product from the CO₂ scrubber to an intermediate-pressure CO₂ flash vessel, means for supplying the gaseous tops product from the intermediate-pressure CO₂ flash vessel to the recompressor, means for supplying the liquid bottoms product from the intermediate-pressure CO₂ flash vessel to a low-pressure CO₂ flash vessel, means for supplying the gaseous tops product from the low-pressure CO₂ flash vessel to the low-pressure H₂S flash vessel and/or to the recompressor, means for supplying the liquid bottoms product from the low-pressure CO₂ flash vessel to at least one apparatus for flash regeneration and/or hot regeneration of the scrubbing medium,
(h) means for recycling the gas stream compressed by the recompressor to the prescrubber for the crude synthesis gas.

6. Plant for purifying a crude synthesis gas by gas scrubbing with a scrubbing medium comprising the following constituents and assemblies:
(a) means for providing and supplying the crude synthesis gas to a prescrubber for removal of trace components such as NH₃, HCN, mercaptans, BTX aromatics,
(b) means for supplying the gaseous tops product from the prescrubber to an H₂S scrubber for removal of H₂S,
(c) means for supplying the gaseous tops product from the H₂S scrubber to a CO₂ scrubber for removal of CO₂,
(d) a multi-stage expander, means for introducing at least some of the gaseous tops product from the CO₂ scrubber into the multi-stage expander to recover mechanical work and refrigeration, means for discharging an expanded, purified synthesis gas stream from the expander,
(e) means for supplying the liquid bottoms product to an intermediate-pressure prescrubbing flash vessel, means for supplying the gaseous tops product from the intermediate-pressure prescrubbing flash vessel to a recompressor, means for supplying the liquid bottoms product from the intermediate-pressure prescrubbing flash vessel to a low-pressure prescrubbing flash vessel, means for supplying the gaseous tops product from the low-pressure prescrubbing flash vessel to the recompressor, means for supplying the liquid bottoms product from the low-pressure prescrubbing flash vessel to at least one apparatus for flash regeneration and/or hot regeneration of the scrubbing medium,
(f) means for supplying the liquid bottoms product from the H₂S scrubber to an intermediate-pressure H₂S flash vessel, means for supplying the gaseous tops product from the intermediate-pressure H₂S flash vessel to the first stage or a subsequent stage of the multi-stage expander or into the conduit downstream of the expander, means for supplying the liquid bottoms product from the intermediate-pressure H₂S flash vessel to a low-pressure H₂S flash vessel, means for supplying the gaseous tops product from the low-pressure H₂S flash vessel to the recompressor, means for supplying the liquid bottoms product from the low-pressure H₂S flash vessel to at least one apparatus for flash regeneration and/or hot regeneration of the scrubbing medium,
(g) means for supplying the liquid bottoms product from the CO₂ scrubber to an intermediate-pressure CO₂ flash vessel, means for supplying the gaseous tops product from the intermediate-pressure CO₂ flash vessel to the first stage or a subsequent stage of the multi-stage expander or into the conduit downstream of the expander, means for supplying the liquid bottoms product from the intermediate-pressure CO₂ flash vessel to a low-pressure CO₂ flash vessel, means for supplying the gaseous tops product from the low-pressure CO₂ flash vessel to the low-pressure H₂S flash vessel and/or to the recompressor, means for supplying the liquid bottoms product from the low-pressure CO₂ flash vessel to at least one apparatus for flash regeneration and/or hot regeneration of the scrubbing medium,
(h) means for recycling the gas stream compressed by the recompressor to the prescrubber for the crude synthesis gas.

## Revendications

1. Procédé pour la purification d'un gaz de synthèse brut par lavage de gaz avec un agent de lavage, comprenant les étapes suivantes :
(a) la fourniture et l'amenée du gaz de synthèse brut à un laveur préliminaire pour l'élimination de composants à l'état de traces tels que du NH₃ et de l'HCN,
(b) l'amenée du produit de tête gazeux du laveur préliminaire à un laveur d'H₂S pour l'élimination d'H₂S,
(c) l'amenée du produit de tête gazeux du laveur d'H₂S à un laveur de CO₂ pour l'élimination de CO₂,
(d) l'évacuation d'un courant de gaz de synthèse purifié en tant que produit de tête gazeux du laveur de CO₂,
(e) l'amenée du produit de fond liquide du laveur préliminaire à un contenant flash de lavage préliminaire à moyenne pression, l'amenée du produit de tête gazeux du contenant flash de lavage préliminaire à moyenne pression à un recompresseur, l'amenée du produit de fond liquide du contenant flash de lavage préliminaire à moyenne pression à un contenant flash de lavage préliminaire à basse pression, l'amenée du produit de tête gazeux du contenant flash de lavage préliminaire à basse pression au recompresseur, l'amenée du produit de fond liquide du contenant flash de lavage préliminaire à basse pression à au moins un dispositif de régénération de flamme et/ou de régénération à chaud de l'agent de lavage,
(f) l'amenée du produit de fond liquide du laveur d'H₂S à un contenant flash d'H₂S à moyenne pression, l'amenée du produit de tête gazeux du contenant flash d'H₂S à moyenne pression au recompresseur, l'amenée du produit de fond liquide du contenant flash d'H₂S à moyenne pression à un contenant flash d'H₂S à basse pression, l'amenée du produit de tête gazeux du contenant flash d'H₂S à basse pression au recompresseur, l'amenée du produit de fond liquide du contenant flash d'H₂S à basse pression à au moins un dispositif de régénération flash et/ou de régénération à chaud de l'agent de lavage,
(g) l'amenée du produit de fond liquide du laveur de CO₂ à un contenant flash de CO₂ à moyenne pression, l'amenée du produit de tête gazeux du contenant flash de CO₂ à moyenne pression au recompresseur, l'amenée du produit de fond liquide du contenant flash de CO₂ à moyenne pression à un contenant flash de CO₂ à basse pression, l'amenée du produit de tête gazeux du contenant flash de CO₂ à basse pression au contenant flash d'H₂S à basse pression et/ou au recompresseur, l'amenée du produit de fond liquide du contenant flash de CO₂ à basse pression à au moins un dispositif de régénération flash et/ou de régénération à chaud de l'agent de lavage,
(h) le recyclage du courant de gaz comprimé au moyen du recompresseur vers le laveur préliminaire pour le gaz de synthèse brut.

2. Procédé pour la purification d'un gaz de synthèse brut par lavage de gaz avec un agent de lavage, comprenant les étapes suivantes :
(a) la fourniture et l'amenée du gaz de synthèse brut à un laveur préliminaire pour l'élimination de composants à l'état de traces tels que du NH₃ et de l'HCN,
(b) l'amenée du produit de tête gazeux du laveur préliminaire à un laveur d'H₂S pour l'élimination d'H₂S,
(c) l'amenée du produit de tête gazeux du laveur d'H₂S à un laveur de CO₂ pour l'élimination de CO₂,
(d) l'introduction d'au moins une partie du produit de tête gazeux du laveur de CO₂ dans un expanseur, de préférence à plusieurs étages, du travail mécanique et du froid étant récupérés et un courant de gaz de synthèse purifié expansé étant évacué de l'expanseur,
(e) l'amenée du produit de fond liquide du laveur préliminaire à un contenant flash de lavage préliminaire à moyenne pression, l'amenée du produit de tête gazeux du contenant flash de lavage préliminaire à moyenne pression à un recompresseur, l'amenée du produit de fond liquide du contenant flash de lavage préliminaire à moyenne pression à un contenant flash de lavage préliminaire à basse pression, l'amenée du produit de tête gazeux du contenant flash de lavage préliminaire à basse pression au recompresseur, l'amenée du produit de fond liquide du contenant flash de lavage préliminaire à basse pression à au moins un dispositif de régénération flash et/ou de régénération à chaud de l'agent de lavage,
(f) l'amenée du produit de fond liquide du laveur d'H₂S à un contenant flash d'H₂S à moyenne pression, l'amenée du produit de tête gazeux du contenant flash d'H₂S à moyenne pression au premier étage ou à un étage suivant de l'expanseur à plusieurs étages ou dans la conduite en aval de l'expanseur, l'amenée du produit de fond liquide du contenant flash d'H₂S à moyenne pression à un contenant flash d'H₂S à basse pression, l'amenée du produit de tête gazeux du contenant flash d'H₂S à basse pression au recompresseur, l'amenée du produit de fond liquide du contenant flash d'H₂S à basse pression à au moins un dispositif de régénération flash et/ou de régénération à chaud de l'agent de lavage,
(g) l'amenée du produit de fond liquide du laveur de CO₂ à un contenant flash de CO₂ à moyenne pression, l'amenée du produit de tête gazeux du contenant flash de CO₂ à moyenne pression au premier étage ou à un étage suivant de l'expanseur à plusieurs étages ou dans la conduite en aval de l'expanseur, l'amenée du produit de fond liquide du contenant flash de CO₂ à moyenne pression à un contenant flash de CO₂ à basse pression, l'amenée du produit de tête gazeux du contenant flash de CO₂ à basse pression au contenant flash d'H₂S à basse pression et/ou au recompresseur, l'amenée du produit de fond liquide du contenant flash de CO₂ à basse pression à au moins un dispositif de régénération flash et/ou de régénération à chaud de l'agent de lavage,
(h) le recyclage du courant de gaz comprimé au moyen du recompresseur vers le laveur préliminaire pour le gaz de synthèse brut.

3. Procédé selon la revendication 1 ou 2, **caractérisé en ce que** l'agent de lavage contient un ou plusieurs composants choisis dans le groupe suivant : méthanol, N-méthylpyrrolidone (NMP), amines secondaires, de préférence diéthanolamine, amines tertiaires, de préférence méthyldiéthanolamine, éther dialkylique de polyéthylèneglycol, de préférence éther diméthylique de polyéthylèneglycol.

4. Procédé selon l'une quelconque des revendications précédentes, **caractérisé en ce que** le recompresseur est réalisé à plusieurs étages, les produits de tête gazeux provenant des contenants flash à basse pression du premier étage et les produits de tête gazeux provenant des contenant flash à moyenne pression étant amenés à un étage suivant du recompresseur à plusieurs étages.

5. Installation pour la purification d'un gaz de synthèse brut par lavage de gaz avec un agent de lavage, comprenant les constituants et modules suivants :
(a) des moyens pour fournir et amener le gaz de synthèse brut à un laveur primaire pour l'élimination de composants à l'état de traces tels que du NH₃, de l'HCN, des mercaptans, des aromatiques BTX,
(b) des moyens pour amener le produit de tête gazeux du laveur préliminaire à un laveur d'H₂S pour l'élimination d'H₂S,
(c) des moyens pour amener le produit de tête gazeux du laveur d'H₂S à un laveur de CO₂ pour l'élimination de CO₂,
(d) des moyens pour évacuer un courant de gaz de synthèse purifié en tant que produit de tête gazeux du laveur de CO₂,
(e) des moyens pour amener le produit de fond liquide à un contenant flash de lavage préliminaire à moyenne pression, des moyens pour amener le produit de tête gazeux du contenant flash de lavage préliminaire à moyenne pression à un recompresseur, des moyens pour amener le produit de fond liquide du contenant flash de lavage préliminaire à moyenne pression à un contenant flash de lavage préliminaire à basse pression, des moyens pour amener le produit de tête gazeux du contenant flash de lavage préliminaire à basse pression au recompresseur, des moyens pour amener le produit de fond liquide du contenant flash de lavage préliminaire à basse pression à au moins un dispositif de régénération flash et/ou de régénération à chaud de l'agent de lavage,
(f) des moyens pour amener le produit de fond liquide du laveur d'H₂S à un contenant flash d'H₂S à moyenne pression, des moyens pour amener le produit de tête gazeux du contenant flash d'H₂S à moyenne pression au recompresseur, des moyens pour amener le produit de fond liquide du contenant flash d'H₂S à moyenne pression à un contenant flash d'H₂S à basse pression, des moyens pour amener le produit de tête gazeux du contenant flash d'H₂S à basse pression au recompresseur, des moyens pour amener le produit de fond liquide du contenant flash d'H₂S à basse pression à au moins un dispositif de régénération flash et/ou de régénération à chaud de l'agent de lavage,
(g) des moyens pour amener le produit de fond liquide du laveur de CO₂ à un contenant flash de CO₂ à moyenne pression, des moyens pour amener le produit de tête gazeux du contenant flash de CO₂ à moyenne pression au recompresseur, des moyens pour amener le produit de fond liquide du contenant flash de CO₂ à moyenne pression à un contenant flash de CO₂ à basse pression, des moyens pour amener le produit de tête gazeux du contenant flash de CO₂ à basse pression au contenant flash d'H₂S à basse pression et/ou au recompresseur, des moyens pour amener le produit de fond liquide du contenant flash de CO₂ à basse pression à au moins un dispositif de régénération flash et/ou de régénération à chaud de l'agent de lavage,
(h) des moyens pour recycler le courant de gaz comprimé au moyen du recompresseur vers le laveur préliminaire pour le gaz de synthèse brut.

6. Installation pour la purification d'un gaz de synthèse brut par lavage de gaz avec un agent de lavage, comprenant les constituants et modules suivants :
(a) des moyens pour fournir et amener le gaz de synthèse brut à un laveur préliminaire pour l'élimination de composants à l'état de traces tels que du NH₃, de l'HCN, des mercaptans, des aromatiques BTX,
(b) des moyens pour amener le produit de tête gazeux du laveur préliminaire à un laveur d'H₂S pour l'élimination d'H₂S,
(c) des moyens pour amener le produit de tête gazeux du laveur d'H₂S à un laveur de CO₂ pour l'élimination de CO₂,
(d) un expanseur à plusieurs étages, des moyens pour introduire au moins une partie du produit de tête gazeux du laveur de CO₂ dans l'expanseur multi-étages, du travail mécanique et du froid étant récupérés, des moyens pour évacuer un courant de gaz de synthèse purifié expansé de l'expanseur,
(e) des moyens pour amener le produit de fond liquide à un contenant flash de lavage préliminaire à moyenne pression, des moyens pour amener le produit de tête gazeux du contenant flash de lavage préliminaire à moyenne pression à un recompresseur, des moyens pour amener le produit de fond liquide du contenant flash de lavage préliminaire à moyenne pression à un contenant flash de lavage préliminaire à basse pression, des moyens pour amener le produit de tête gazeux du contenant flash de lavage préliminaire à basse pression au recompresseur, des moyens pour amener le produit de fond liquide du contenant flash de lavage préliminaire à basse pression à au moins un dispositif de régénération flash et/ou de régénération à chaud de l'agent de lavage,
(f) des moyens pour amener le produit de fond liquide du laveur d'H₂S à un contenant flash d'H₂S à moyenne pression, des moyens pour amener le produit de tête gazeux du contenant flash d'H₂S à moyenne pression au premier étage ou à un étage suivant de l'expanseur à plusieurs étages ou dans la conduite en aval de l'expanseur, des moyens pour amener le produit de fond liquide du contenant flash d'H₂S à moyenne pression à un contenant flash d'H₂S à basse pression, des moyens pour amener le produit de tête gazeux du contenant flash d'H₂S à basse pression au recompresseur, des moyens pour amener le produit de fond liquide du contenant flash d'H₂S à basse pression à au moins un dispositif de régénération flash et/ou de régénération à chaud de l'agent de lavage,
(g) des moyens pour amener le produit de fond liquide du laveur de CO₂ à un contenant flash de CO₂ à moyenne pression, des moyens pour amener le produit de tête gazeux du contenant flash de CO₂ à moyenne pression au premier étage ou à un étage suivant de l'expanseur à plusieurs étages ou dans la conduite en aval de l'expanseur, des moyens pour amener le produit de fond liquide du contenant flash de CO₂ à moyenne pression à un contenant flash de CO₂ à basse pression, des moyens pour amener le produit de tête gazeux du contenant flash de CO₂ à basse pression au contenant flash d'H₂S à basse pression et/ou au recompresseur, des moyens pour amener le produit de fond liquide du contenant flash de CO₂ à basse pression à au moins un dispositif de régénération flash et/ou de régénération à chaud de l'agent de lavage,
(h) des moyens pour recycler le courant de gaz comprimé au moyen du recompresseur vers le laveur préliminaire pour le gaz de synthèse brut.
